# EUROPÄISCHE PATENTSCHRIFT

(11) **EP 2 303 941 B1**
(45) Veröffentlichungstag und Bekanntmachung des Hinweises auf die Patenterteilung: **21.08.2013**
(21) Anmeldenummer: 09780941.2
(22) Anmeldetag: 22.07.2009
(51) Int. Cl.: C08G 18/16, C08G 18/42, C08G 18/48, C08G 18/80, C08G 18/28, C08G 18/10, C08J 9/14

(54) **SCHÄUMBARE MISCHUNGEN MIT NIEDRIGER VISKOSITÄT**
FOAMABLE LOW-VISCOSITY MIXTURES
MÉLANGES EXPANSIBLES À FAIBLE VISCOSITÉ

(30) Priorität: 22.07.2008 DE 102008034272; 30.06.2009 DE 102009027332
(43) Veröffentlichungstag der Anmeldung: 06.04.2011
(73) Patentinhaber: Henkel AG & Co. KGaA, 40589 Düsseldorf (DE)
(72) Erfinder: HÜBNER, Wilfried, 40764 Langenfeld (DE); SEBESTIAN, Milan, 41515 Grevenbroich (DE); KUNZE, Christiane, 51061 Köln (DE); ZANDER, Lars, 41569 Rommerskirchen (DE); KLEIN, Johann, 40593 Düsseldorf (DE)
(86) Internationale Anmeldenummer: PCT/EP2009/059443
(87) Internationale Veröffentlichungsnummer: WO 2010/010128

(56) Entgegenhaltungen:
- WO-A1-02/066532
- WO-A1-2005/049684
- DE-A1-102006 054 155
- US-A1- 2005 075 469

## Beschreibung

Die Erfindung betrifft schäumbare Mischungen, die zu Schaumkunststoffen weiter verarbeitet werden können.

Schaumkunststoffe im Sinne dieser Erfindung werden aus Einweg-Druckbehältern am Ort ihrer Verwendung erzeugt, man spricht daher auch von einem Ortschaum (DIN 18159). Insbesondere handelt es sich hier um feuchtigkeitshärtende Einkomponenten-Systeme. Die zu verschäumende Zusammensetzung befindet sich dabei in der Regel in Einweg-Druckbehältern (Aerosol-Dosen). Diese sprühbaren Schäume dienen vor allem im Bauwesen zum Dichten, Dämmen und Montieren, z.B. von Fugen, Dachflächen, Fenstern und Türen oder zum Ausfüllen von Hohlräumen. Als ausgezeichnet isolierende Materialien führen sie im ausgeschäumten Zustand zu einer guten Wärmedämmung. Weitere Anwendungsfelder sind unter anderem die Isolierung von Rohrleitungen oder das Ausschäumen von Hohlräumen in technischen Geräten und Maschinen.

Bei den bisher hauptsächlich eingesetzten Montageschäumen handelt es sich um Polyurethanschäume (PU-Schäume), die im unvernetzten Zustand aus Prepolymeren bestehen, die über eine hohe Konzentration an freien Isocyanatgruppen verfügen. Diese Isocyanatgruppen sind in der Lage, mit geeigneten Reaktionspartnern bereits bei Raumtemperatur Additionsreaktionen einzugehen, wodurch eine Aushärtung des Sprayschaumes nach dem Auftrag erreicht wird. Die Schaumstruktur wird dabei durch das Einmengen eines leichtflüchtigen Treibmittels in das noch unvernetzte Rohmaterial und/oder durch Kohlendioxid erzeugt, wobei letzteres durch eine Reaktion der Isocyanate mit Wasser gebildet wird. Das Ausbringen des Schaums geschieht in der Regel aus Einweg-Druckbehältern (Druckdosen oder Aerosol-Dosen) durch den Eigendruck des Treibmittels.

Als Reaktionspartner für die Isocyanate dienen Alkohole mit zwei oder mehr OH-Gruppen - vor allem verzweigte und unverzweigte Polyole - oder Wasser. Letzteres reagiert mit den Isocyanaten unter der bereits erwähnten Freisetzung von Kohlendioxid zu primären Aminen, die sich dann direkt an eine weitere, noch unverbrauchte Isocyanatgruppe addieren können. Es entstehen Urethan- bzw. Harnstoffeinheiten, die auf Grund ihrer hohen Polarität und ihrer Fähigkeit zur Ausbildung von Wasserstoffbrückenbindungen im ausgehärteten Material teilkristalline Substrukturen ausbilden können und so zu Schäumen mit hoher Härte, Druck- und Reißfestigkeit führen.

Neben dem Kohlendioxid werden als Treibmittel meist Gase verwendet, die bereits bei relativ geringem Druck kondensierbar sind und somit der Prepolymermischung in flüssigem Zustand beigemischt werden können, ohne dass die Spraydosen übermäßig hohen Drücken ausgesetzt werden müssen.

PU-Sprayschäume werden sowohl als sogenannte einkomponentige (1 K-) als auch als zweikomponentige (2K-) Schäume hergestellt. Die 1K-Schäume härten dabei ausschließlich durch den Kontakt der isocyanathaltigen Prepolymermischung mit der Luftfeuchtigkeit aus. Durch das bei den 1 K-Schäumen während der Härtungsreaktion freigesetzte Kohlendioxid kann zudem die Schaumbildung unterstützt werden. 2K-Schäume enthalten eine Isocyanat- und eine Polyolkomponente, die direkt vor dem Verschäumen gut miteinander vermischt werden müssen und durch die Reaktion des Polyols mit den Isocyanaten aushärten. Vorteil der 2K-Systeme ist eine extrem kurze Aushärtdauer von z. T. nur wenigen Minuten bis zu einer vollständigen Härtung. Sie besitzen jedoch den Nachteil, dass sie eine aufwändiger gestaltete Druckdose mit zwei Kammern benötigen und zudem in der Handhabung deutlich weniger komfortabel sind als die 1 K-Systeme.

Die ausgehärteten PU-Schäume zeichnen sich vor allem durch ihre ausgezeichneten mechanischen und Wärme dämmenden Eigenschaften aus, außerdem besitzen sie eine sehr gute Haftung zu sehr vielen im Baubereich vorkommenden Untergründen und sind unter trockenen und UV-geschützten Bedingungen von nahezu unbegrenzter Beständigkeit. Weitere Vorteile liegen in der toxikologischen Unbedenklichkeit der ausgehärteten Schäume ab dem Zeitpunkt, an dem sämtliche Isocyanatgruppen, insbesondere die der monomeren Isocyanate, quantitativ abreagiert sind, Sie härten in sehr kurzer Zeit aus und sind leicht handhabbar. Auf Grund dieser Eigenschaften haben sich PU-Schäume in der Praxis sehr bewährt.

Die in Druckdosen zur Schaumerzeugung verwendeten Prepolymer-Mischungen auf Basis von Polyisocyanaten und Polyolen enthalten, neben relativ hochmolekularen Prepolymeren, zumeist auch nicht oder nur zu niedermolekularen Prepolymeren abreagiertes Polyisocyanat. Diese Bestandteile der Prepolymermischungen bilden, wegen ihrer höheren Flüchtigkeit, das eigentliche Gefährdungspotential und sind deshalb unerwünscht, weil die Isocyanate, insbesondere die monomeren Isocyanate, auf Grund ihrer hohen Reaktivität und ihres hohen Dampfdruckes auch ausgesprochen reizende und toxische Wirkungen entfalten können.

Die unvernetzten Sprayschaummassen sind bis zur vollständigen Aushärtung somit toxikologisch nicht unbedenklich. Kritisch ist hier neben dem direkten Kontakt der Prepolymermischung mit der Haut vor allem auch eine mögliche Aerosolbildung während des Aufbringens des Schaums oder das Verdampfen von niedermolekularen Bestandteilen, z.B. von monomeren Isocyanaten. Dadurch besteht die Gefahr, dass toxikologisch bedenkliche Verbindungen über die Atemluft aufgenommen werden. Zudem besitzen Isocyanate ein erhebliches allergenes und sensibilisierendes Potential und können u. a. Asthmaanfälle auslösen. Verschärft werden diese Risiken noch durch die Tatsache, dass die PU-Sprayschäume oftmals nicht von geschulten und geübten Anwendern, sondern von Bastlern und Heimwerkern verwendet werden, so dass eine sachgerechte Handhabung nicht immer vorausgesetzt werden kann.

Auch stehen die Amine, die sich durch eine Reaktion von monomeren Diisocyanaten mit einem Überschuss an Wasser bilden können, in vielen Fällen im Verdacht, krebserregend zu sein.

Neben diesem Gefährdungspotential, das bei sachgemäßer Handhabung eher als niedrig einzustufen ist, besteht aber bei zahlreichen Anwendern ein Akzeptanzproblem, das durch die Deklarierungspflicht derartiger Produkte als toxisch und die Einstufung der entleerten oder teilentleerten Behälter als Sonderabfall, der in einigen Ländern wie z.B. Deutschland sogar mittels eines kostenintensiven Recyclingsystems einer Wiederverwertung zugänglich gemacht werden muss, noch gefördert wird.

Um diese Nachteile zu überwinden, wurden u. a. in WO 96/06124 bereits Prepolymere für Sprayschäume beschrieben, die keine bzw. nur sehr geringe Konzentrationen an monomeren Isocyanaten enthalten. Nachteilig an solchen Systemen ist jedoch die Tatsache, dass die so hergestellten Prepolymere noch immer über reaktive Isocyanatgruppen verfügen, so dass derartige PU-Sprayschäume unter toxikologischen Gesichtspunkten zwar als günstiger als herkömmliche Schäume, nicht aber als unbedenklich zu bezeichnen sind. Auch werden die Akzeptanz- und Abfallprobleme durch derartige Schaumsysteme nicht vollständig befriedigend gelöst.

WO 2000/04069 beschreibt Prepolymerabmischungen zur Erzeugung von Dicht- und Dämmschäumen, die eine Prepolymerkomponente, eine Treibgaskomponente und zur Schaumbildung benötigte übliche Zusatzstoffe enthalten. Die Prepolymerkomponente soll dabei ein silanterminiertes PolyurethanPrepolymer sein, das wenigstens zwei Si(OR)ₓ(R)₃₋ₓ-Gruppen im Molekül aufweist, wobei R jeweils für einen Alkylrest mit 1 bis 6 Kohlenstoffatomen steht und x eine ganze Zahl von 1 bis 3 ist Derartige Prepolymerkomponenten weisen häufig eine sehr hohe Viskosität von über 1 000 000 mPas auf und führen zu erheblichen Problemen in der Dosenschaumherstellung, weshalb sie häufig bei hohen Temperaturen abgefüllt werden müssen. Die Durchmischbarkeit der viskosen Prepolymere mit den übrigen Bestandteilen ist ebenfalls unbefriedigend. Derartige schäumbare Mischungen sind dadurch im Fertigungs- und Abfüllprozess in die Druckdosen schwer zu handhaben.

WO2002/066532 offenbart isocyanatfreie schäumbare Mischungen, die isocyanatfreie, alkoxysilanterminierte Prepolymere und Treibmittel enthalten, wobei die Prepolymeren über Silanterminierungen der allgemeinen Formel 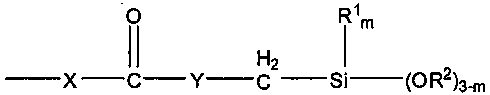 verfügen sollen. In der Formel stellen X und Y ein Sauerstoffatom, eine N-R³-Gruppe oder ein Schwefelatom dar, R¹ ist ein Alkyl-, Alkenyl- oder Arylrest mit 1-10 Kohlenstoffatomen, R² ein Alkylrest mit 1-2 Kohlenstoffatomen oder ein - Oxaalkyl-alkylrest mit insgesamt 2-10 Kohlenstoffatomen, R³ ein Wasserstoffatom, ein Alkyl-, Cycloalkyl-, Alkenyl- oder Arylrest mit 1-10 Kohlenstoffatomen oder eine - CH₂-SiR¹ₘ(OR²)₃₋ₘ-Gruppe.z kann die Werte 0 oder 1 bedeuten, dabei soll mindestens eine der beiden Gruppen X oder Y eine NH-Funktion sein. Diese Prepolymeren weisen ebenfalls bei Raumtemperatur eine sehr hohe Viskosität auf.

Die WO2005/049684 betrifft Silylgruppen und NCO-Gruppen tragende Polyurethane oder Polyharnstoffe, die unter Verwendung von asymmetrischen Diisocyanaten und substituierten Alkoxyaminosilanen herstellbar sind. Es werden ferner Zubereitungen beschrieben sowie deren Verwendung als Oberflächenbeschichtungsmittel, Klebstoffe, Montageschäume, Vergussmassen sowie Weich-, Hart- und Integralschäume. Auch diese Prepolymeren werden als mittelviskos bis hochviskos beschrieben. DE 10 2006 054155 A1 offenbart schäumbare Mischungen enthaltend alkoxysilanterminierte Prepolymere. Die Prepolymere werden durch Reaktion eines Polyols mit einem Diisocyanat und anschließende Umsetzung mit einem Aminosilan hergestellt. Das Prepolymer wird in eine Druckdose abgefüllt und nach dem Verschließen der Druckdose mit einem Ventil mit Treibmittel beaufschlagt. Über die Viskosität der schäumbaren Mischung wird nichts ausgesagt. Da der daraus gebildete Schaum jedoch sehr hohe Viskosität aufweist, ist auch für die schäumbare Mischung von hoher Viskosität auszugehen.

WO-A-96/38453 beschreibt feuchtigkeitshärtende alkoxysilanfunktionelle Polyurethane hergestellt aus einem hydroxyfunktionellen Alkoxysilan, insbesondere einem Hydroxyalkylencarbamoylalkylenalkoxysilan, und einem isocyanatfunktionellen Polyurethanprepolymer. Gemäß der Lehre dieser Schrift können die alkoxysilanfunktionellen Polyurethane zur Anwendung in feuchtigkeitshärtenden Klebstoffen, Dichtstoffen und ähnlichen Zubereitungen verwendet werden. Schäumbare Zusammensetzungen werden nicht beschrieben.

In ähnlicher Weise wie die vorher zitierte Schrift offenbart US-A-5866651 feuchtigkeitshärtende Dichtstoffzusammensetzungen auf Basis von Polyetherurethanen hergestellt aus Hydroxyalkylencarbamoylalkylen-alkoxysilanen. Gemäß der Lehre dieser Schrift sollen die Polyethersegmente mehr als 15 mol% und weniger als 40 mol% Ethylenoxideinheiten aufweisen, wobei die Polyethersegmente ein zahlenmittleres Molekulargewicht zwischen 2000 und 8000 haben sollen, wobei die Ethylenoxideinheiten vorzugsweise an den Enden der Propylenoxideinheiten angeordnet sind. Schäumbare Zusammensetzungen werden auch in dieser Schrift nicht beschrieben.

Aus US 2005/075469 A1 sind Prepolymer-Zusammensetzungen zur Herstellung von Dichtungsmassen bekannt. Diese werden gemäß der Beispiele durch Umsetzung von Polypropylenglykol mit einem Diisocyanat und einem Aminosilan zu einem isocyanatofunktionalisierten Alkoxysilan und anschließende Reaktion mit Nonylphenol erhalten. Die Zugabe eines Treibmittels ist nicht vorgesehen. Schäumbare Zusammensetzungen werden demnach auch in dieser Schrift nicht beschrieben.

Aufgabe der vorliegenden Erfindung ist daher, schäumbare Zusammensetzungen bereitzustellen, die während der Herstellung und Konfektionierung in Einweg-Druckbehälter (Druckdosen oder Aerosol-Dosen) auch bei niedrigeren Temperaturen - Raumtemperatur bzw. mäßiges Erwärmen - leicht zu handhaben sind und sich insbesondere gut in derartige Druckbehälter abfüllen lassen. Ferner sollen die Zusammensetzungen feinzellige Schäume mit möglichst geringer Schrumpfungstendenz ergeben.

Der Erfindung liegt die Erkenntnis zugrunde, dass diese Aufgabe durch die Bereitstellung schäumbarer Zusammensetzungen mit möglichst niedriger Viskosität, die gegebenenfalls erst im Druckbehälter zum Prepolymer reagieren, gelöst werden kann.

Gegenstand der vorliegenden Erfindung ist daher eine schäumbare Mischung, die mindestens ein alkoxysilanterminiertes Prepolymer, das aus
a) mindestens einem isocyanatofunktionalisierten Alkoxysilan, welches aus mindestens einem hydroxy-und/oder aminofunktionellen Alkoxysilan und mindestens einem Di-oder Polyisocyanat herstellbar ist, und
b) mindestens einer Verbindung, die mindestens eine OH-Gruppe enthält, herstellbar ist;
und mindestens ein Treibmittel enthält und die dadurch gekennzeichnet ist,
dass die schäumbare Mischung bei 23° C eine dynamische Viskosität von 100 bis 25 000 mPas (gemessen nach Substitution des Treibmittels durch eine gewichtsgleiche Methylal/Pentan - Mischung im Gewichtsverhältnis 40:60; Rotationsrheometer ARES (von TA Instruments); 23°C, 30 Hz; Kegel-Platte (Kegelwinkel 0,5°)), aufweist.

"Gewichtsgleich" bedeutet dabei, dass das Treibmittel durch eine Methylal/Pentan - Mischung substituiert wird, die das gleiche Gewicht aufweist wie das ursprünglich in der Mischung enthaltene Treibmittel.

Vorzugsweise beträgt die dynamische Viskosität der erfindungsgemäßen Mischung 500 - 10.000 mPas.

Die Lösung der Aufgabe besteht also im Wesentlichen in der Bereitstellung einer schäumbaren Mischung, die mindestens ein alkoxysilanterminiertes Prepolymer, das gegebenenfalls erst im Druckbehälter aus a) mindestens einem isocyanatofunktionalisierten Alkoxysilan, welches aus mindestens einem hydroxy- und/oder aminofunktionellen Alkoxysilan und mindestens einem Di- oder Polyisocyanat herstellbar ist, und b) mindestens einer Verbindung, die mindestens eine OH-Gruppe enthält, herstellbar ist, und mindestens ein Treibmittel enthält, und die dadurch gekennzeichnet ist, dass die schäumbare Mischung bei 23° C eine dynamische Viskosität von 100 bis 25.000 mPas, vorzugsweise 500 bis 10.000 mPas, aufweist.

Unter schäumbaren Mischungen werden im Sinne der vorliegenden Erfindung Zusammensetzungen verstanden, die vernetzbare Polymere enthalten, welche nach Applikation unter dem Einfluss von aus einem Treibmittel und ggf. zusätzlich durch chemische Reaktionen freigesetztem Gas eine Volumenausdehnung erfahren und Gebilde aus gasgefüllten Zellen ausbilden. Die Stabilisierung der Schäume erfolgt dabei durch die Verfestigung der aufbauenden Substanzen und ggf. durch zugesetzte Schaumstabilisatoren. Bei den aus schäumbaren Mischungen entstehenden Schäumen handelt es sich im Sinne der vorliegenden Erfindung also um Werkstoffe mit über ihre ganze Masse verteilten offenen und/oder geschlossenen Zellen und einer Rohdichte, die niedriger ist als die der Gerüstsubstanz.

Unter alkoxysilanterminierten Prepolymeren werden polymere Verbindungen verstanden, die an wenigstens einem Terminus eine Silylgruppe tragen, die ihrerseits mindestens eine, vorzugsweise zwei oder drei, Alkoxygruppe(n) enthält. In Gegenwart von Luftfeuchtigkeit sind Polymere, die über Silylgruppen mit derartigen hydrolysierbaren Substituenten verfügen, bereits bei Raumtemperatur in der Lage, unter Abspaltung der hydrolysierten Reste miteinander zu kondensieren. Je nach Gehalt an Silylgruppen mit hydrolysierbaren Substituenten und dem Aufbau dieser Silylgruppen bilden sich dabei hauptsächlich langkettige Polymere (Thermoplaste), relativ weitmaschige, dreidimensionale Netzwerke (Elastomere) oder hochvernetzte Systeme (Duroplaste).

Unter hydroxy-oder aminofunktionellen Alkoxysilanen werden kurzkettige, monomere Verbindungen mit einer terminalen Silylgruppe, die ihrerseits mindestens eine, vorzugsweise zwei oder drei, Alkoxygruppe(n) enthält, verstanden, die mindestens eine Hydroxy- oder eine primäre oder sekundäre Aminogruppe in terminaler Position, innerhalb des die Verbindung konstituierenden Gerüstes oder als Substituent an diesem Gerüst aufweisen. Diese mindestens eine Hydroxy- oder primäre oder sekundäre Aminogruppe befindet sich jedoch nicht an der terminalen Silylgruppe. Sowohl die Hydroxy- als auch die Aminogruppe weisen mindestens ein bewegliches Wasserstoffatom auf und sind gegenüber carbonylaktiven Verbindungen - z.B. Polymeren mit endständigen Isocyanatgruppen - reaktiv.

Unter isocyanatofunktionalisierten Alkoxysilanen werden monomere Verbindungen mit einer terminalen Silylgruppe im Sinne der vorstehenden Definition verstanden, die darüber hinaus mindestens eine terminale Isocyanat-Funktion (-NCO) enthalten. Durch Reaktionen von Polymeren, die gegenüber Isocyantfunktionen reaktive Gruppen - z. B. Hydroxy- oder Aminogruppen - enthalten, mit isocyanatofunktionalisierten Alkoxysilanen können alkoxysilanterminierte Prepolymere erhalten werden.

Unter Treibmitteln werden Treibgase und solche Stoffe, die unter der Einwirkung von Wärme oder Chemikalien Treibgase entwickeln, verstanden. Im engeren Sinne werden darunter Gase verstanden, die meist schon bei geringen Drücken und 20°C vom gasförmigen in den flüssigen Zustand übergeführt werden können, also die sogenannten Flüssiggase.

Dosenschaumformulierungen enthalten Treibgase, die eine Bestimmung der Viskosität nicht ohne weiteres zulassen. Um diese dennoch zu bestimmen, ist dem Fachmann bekannt, dass eine Substitution der Treibgase mit Methylal und Pentan zu einer drucklosen Schaumformulierung führt. Die Messung der Viskosität der erfindungsgemäßen schäumbaren Mischungen erfolgt deshalb unter Substitution des Treibmittels durch einen entsprechenden Gewichtsanteil einer Mischung aus 40 Gew.-% Methylal und 60 Gew.-% Pentan, d.h. anstelle des Treibmittels wird ein gleicher Anteil Methylal / Pentan zugegeben. Dies kann im einfachsten Fall dadurch geschehen, dass bei der Herstellung der erfindungsgemäßen Mischung einem für die Viskositätsbestimmung vorgesehenen Teil der Mischung das eigentliche Treibmittel gar nicht erst zugesetzt wird, sondern direkt das Methylal / Pentan - Gemisch. Die dynamische Viskosität der erfindungsgemäßen schäumbaren Mischungen wird also gemessen bei 23 °C unter Substitution des Treibmittels durch eine Methylal / Pentan - Mischung im Verhältnis 40 : 60. So werden zum Beispiel bei einer Formulierung, die 21 Gew.-% Treibmittel bezogen auf die gesamte schäumbare Mischung enthält, die Treibgase der Dosenschaumformulierung durch eine Mischung von 8,4 Gew.-% Methylal und 12,6 Gew.-% Pentan substituiert. Die Formulierung weist damit die rheologischen Verhältnisse einer mit Treibmittel, wie z.B. DME/Propan/Butan, formulierten Schaumzusammensetzung auf. Man beobachtet, dass sich Mischungen knapp unterhalb von 25.000 mPas noch mäßig, unterhalb von 10.000 mPas besonders gut applizieren lassen. Die Messung der Viskosität erfolgt mit dem deformationsgesteuerten Rotationsrheometer ARES der Fa. TA Instruments. Die Messung erfolgt nach DIN 53018 für newtonsche Mischungen bzw. DIN 53019 für strukturviskose Mischungen, jeweils bei 30 Hz. Als Meßsysteme werden Kegel-Platte-Systeme mit einem Kegelwinkel von 0,5° eingesetzt. Der Kegelwinkel kann auch innerhalb eines Bereiches von 0,5 bis 3° variiert werden. Alternativ können für höherviskose Systeme, die Feststoffe enthalten, Platte-Platte-Systeme mit einem Spalt zwischen 200 mm - 800 mm eingesetzt werden. Die Viskositätswerte werden mit einem Rotationsversuch bei Raumtemperatur bestimmt. Nach einer Ruhezeit von 10 s wird die Scherdeformation von 0 s⁻¹ bis 100 s⁻¹ in einer Zeit von 20 s in linearen Schritten erreicht. Die Messung erfolgt bei 30 Hz.

Ein wichtiger Vorteil der erfindungsgemäßen schäumbaren Mischungen besteht darin, dass sie überwiegend Strukturviskosität aufweisen. Eine strukturviskose Flüssigkeit ist dadurch gekennzeichnet, dass sie unter dem Einfluss zunehmender Schubspannung oder Schergeschwindigkeit eine abnehmende Viskosität aufweist. Dementsprechend zeigen die betreffenden erfindungsgemäßen Mischungen beim Applizieren - unter hoher Spannung in der Dose bzw. beim Austritt durch die schmale Düsenöffnung - eine geringe Viskosität und nach Auftrag - nun weitgehend spannungsfrei - eine hohe, wobei der Schaum durch den einsetzenden Härtungsprozess weiter stabilisiert wird. Sowohl das Ausbringen aus der Druckdose als auch die schnelle Ausbildung eines stabilen Schaums werden durch die Strukturviskosität der betreffenden erfindungsgemäßen Mischungen also erheblich erleichtert.

In einer bevorzugten Ausführungsform der erfindungsgemäßen schäumbaren Mischung wird das isocyanatofunktionalisierte Alkoxysilan aus mindestens einem Di- oder Polyisocyanat und mindestens einem amino- und/oder hydroxyfunktionellen Alkoxysilan der Formel (1) 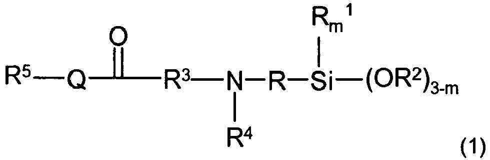 worin m 0, 1 oder 2 ist, R eine divalente organische Gruppe ist, R¹ ein Alkylrest mit 1 bis 8, bevorzugt 1 bis 4, Kohlenstoffatomen ist, R² ein Alkylrest mit 1 bis 8, bevorzugt 1 bis 4, Kohlenstoffatomen ist, R³ eine kovalente Bindung oder eine Alkylengruppe mit 1 bis 6 Kohlenstoffatomen ist, Q ein Sauerstoffatom oder eine kovalente Bindung ist, R⁴ ein Wasserstoffatom, ein Alkyl- oder ein Arylrest mit 1 bis 10 Kohlenstoffatomen ist und R⁵ eine Alkyl- oder Hydroxyalkylgruppe mit 1 bis 6 Kohlenstoffatomen ist, wobei für den Fall, dass R⁵ eine Alkylgruppe ist (d. h. R⁵ enthält in diesem Fall keine OH-Gruppe und ist daher keine Hydroxyalkylgruppe), R⁴ ein Wasserstoffatom ist, hergestellt.

Besonders bevorzugt ist R ein difunktioneller gerader oder verzweigter Alkylenrest mit 2 bis 6 Kohlenstoffatomen, z.B. ein Ethylen-, Propylen-, Butylen-, Pentylen- oder Hexylenrest oder ein Isopropylen-, Isobutylen-, Isopentylen- oder Isohexylenrest oder ein Neopentylenrest.

R¹ und R² können gleich oder verschieden sein, beispielsweise handelt es sich bei diesen Substituenten um eine Methyl-, Ethyl-, n-Propyl-, iso-Propyl-, n-Butyl- und/oder eine iso-Butyl-Gruppe. Wenn R³ eine Alkylengruppe ist, kann es sich dabei beispielsweise um eine Methylen-, Ethylen-, Propylen-, Butylen-, Pentylen- oder Hexylengruppe oder eine Isopropylen-, Isobutylen-, Isopentylen- oder Isohexylengruppe oder eine Neopentylengruppe handeln. R⁴ steht für ein Wasserstoffatom oder für einen Alkyl- oder Arylrest mit 1 bis 10 Kohlenstoffatomen, beispielsweise für einen Methyl-, Ethyl-, n-Propyl-, iso-Propyl-, n-Butyl-, iso-Butyl-, n-Pentyl-, iso-Pentyl-, Neopentyl-, n-Hexyl-, Cyclohexyl-Rest oder für einen Phenyl-oder einen Anilino-Rest. R⁵ ist beispielsweise eine Methyl-, Ethyl-, n-Propyl-, iso-Propyl-, n-Butyl-, isoButyl-, n-Pentyl-, iso-Pentyl oder n-Hexyl-Gruppe, in der gegebenenfalls ein Wasserstoffatom durch eine OH-Gruppe, besonders bevorzugt eine terminale OH-Gruppe, substituiert ist.

In einer weiteren bevorzugten Ausführungsform der vorliegenden Erfindung ist für den Fall, dass R³ eine kovalente Bindung ist, R⁵ eine Hydroxyalkylgruppe. In diesem Fall sind entsprechende hydroxyfunktionelle Alkoxysilane herstellbar durch Umsetzung von Aminosilanen mit Alkylencarbonaten oder -lactonen. In einer weiteren bevorzugten Ausführungsform ist für den Fall, dass R³ eine Alkylengruppe ist, R⁴ ein Wasserstoffatom. In diesem Fall sind Alkoxysilane, die mindestens eine sekundäre Aminogruppe enthalten, durch Umsetzung von primären Aminosilanen mit Acrylsäureestern zugänglich. In jedem Fall steht also mindestens eine gegenüber Isocyanatgruppen reaktive Funktionalität - entweder eine Hydroxy- oder eine Aminogruppe - zur Verfügung. R⁵ kann selbstverständlich auch dann eine OH-Gruppe tragen, wenn R³ eine Alkylengruppe ist. Ebenso kann R⁴ auch dann ein Wasserstoffatom sein, wenn R³ eine kovalente Bindung ist.

Ein hydroxyfunktionelles Alkoxysilan der Formel (1) wird vorzugsweise durch Umsetzung eines Aminosilans mit primären oder sekundären Aminogruppen mit einem Carbonat, ausgewählt aus Ethylencarbonat, Propylencarbonat, Butylencarbonat, Carbonaten hergestellt aus 1,3-Propandiol, 3,5-Hexandiol, 3,5-Heptandiol, 3,5-Nonandiol, oder einem Lacton, ausgewählt aus Propiolacton, Butyrolacton oder Caprolacton, hergestellt. Alternativ ist ein hydroxyfunktionelles Alkoxysilan der Formel (1) ein Umsetzungsprodukt eines (Hydroxy-)Alkyl(meth)acrylates mit einem Aminosilan.

Das Aminosilan kann ausgewählt werden aus 3-Aminopropyl-trimethoxysilan, 3-Aminopropyltriethoxysilan (beispielsweise Dynasilan AMMO, Fa. Evonik oder Geniosil GF 96, Fa. Wacker), N-(n-Butyl)-3-aminopropyltrimethoxysilan, 3-Aminopropylmethyldimethoxysilan, 3-Aminopropylmethyldiethoxysilan, N-Cyclohexylaminomethylmethyldiethoxysilan, N-Cyclohexylaminomethyltriethoxysilan, N-Phenylaminomethyltrimethoxysilan (z. B. Geniosil XL 973, Fa. Wacker), N-Cyclohexyl-3-aminopropyltrimethoxysilan, 1-Anilinomethyldimethoxymethylsilan (z. B. Geniosil XL972, Fa. Wacker), N-Phenyl-3-aminopropyltrimethoxysilan (z. B. Y-9669 der Fa. Momentive) oder Bis(3-triethoxysilylpropyl)amin (Silquest A-1170, Fa. GE).

Hydroxyalkyl(meth)acrylate können prinzipiell Monoester der Acrylsäure oder Methacrylsäure mit C₂- bis C₂₀-Diolen sein, besonders bevorzugt werden Hydroxyethylacrylat, Hydroxyethylmethacrylat, 2-Hydroxypropylacrylat, 2-Hydroxypropylmethacrylat, 3-Hydroxypropylacrylat, 3-Hydroxypropylmethacrylat oder 2-Hydroxybutylacrylat, 2-Hydroxybutylmethacrylat, 3-Hydroxybutylacrylat, 3-Hydroxy-butylmethacrylat, 4-Hydroxybutylacrylat, 4-Hydroxybutylmethacrylat, 6-Hydroxyhexylacrylat oder 6-Hydroxyhexylmethacrylat.

In einer weiteren bevorzugten Ausführungsform der erfindungsgemäßen schäumbaren Mischung ist m in der Formel (1) null oder eins. Generell verfügen Polymere, die Di- bzw. Trialkoxysilylgruppen enthalten, über hoch reaktive Verknüpfungsstellen, die ein schnelles Aushärten, hohe Vernetzungsgrade und damit gute Endfestigkeiten ermöglichen. Ein weiterer Vorteil solcher Alkoxygruppen enthaltenden Polymere ist darin zu sehen, dass bei der Aushärtung unter dem Einfluss von Feuchtigkeit Alkohole gebildet werden, die in den freigesetzten Mengen unbedenklich sind und verdunsten. Daher eignen sich derartige Zusammensetzungen insbesondere auch für den Heimwerkerbereich. Der besondere Vorteil von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb z. B. für die Anwendung als Dichtschaum besonders geeignet. Darüber hinaus spalten sie bei der Aushärtung noch weniger Alkohol ab und sind deshalb besonders interessant, wenn die Menge an freigesetztem Alkohol reduziert werden soll.

Mit Trialkoxysilylgruppen hingegen lässt sich ein höherer Vernetzungsgrad erreichen, was besonders vorteilhaft ist, wenn nach der Aushärtung ein härterer, festerer Schaum gewünscht wird. Darüber hinaus sind Trialkoxysilylgruppen reaktiver, vernetzen also schneller und senken somit die ggf. benötigte Menge an Katalysator, und sie weisen Vorteile beim "kalten Fluss" - der Formstabilität der ausgehärteten Zusammensetzung unter dem Einfluss von Kraft- und gegebenenfalls Temperatureinwirkung - auf.

Erfindungsgemäß sind die isocyanatofunktionalisierten Alkoxysilane der Komponente a) zur Herstellung der alkoxysilanterminierten Prepolymere herstellbar aus mindestens einem hydroxy- und/oder aminofunktionellen Alkoxysilan und mindestens einem Di- oder Polyisocyanat. In einer weiteren bevorzugten Ausführungsform der erfindungsgemäßen schäumbaren Mischung wird bei der Herstellung des/der isocyanatofunktionalisierten Alkoxysilans/Alkoxysilane mindestens ein Diisocyanat eingesetzt. Besonders bevorzugt wird das Diisocyanat im stöchiometrischen Überschuß, bezogen auf die Amino-und/oder OH-Gruppen des/der hydroxy- oder aminofunktionellen Alkoxysilans/Alkoxysilane, eingesetzt, wobei das NCO / OH- bzw. NCO / NH-Verhältnis 1,5 bis 3, vorzugsweise 1,8 bis 2,2 und besonders bevorzugt etwa 2 beträgt.

Als Diisocyanate können verwendet werden:

Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3-oder-1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI) oder Isomerengemische des TDI, 2,4'-Diphenylmethandiisocyanat, 2,2'-Diphenylmethandiisocyanat oder 4,4'-Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Diisocyanate der Dimerfettsäuren, oder Gemische aus zwei oder mehr der genannten Diisocyanate, in Frage.

In einer weiteren bevorzugten Ausführungsform der erfindungsgemäßen schäumbaren Mischung ist der Rest-NCO-Gehalt kleiner als 1. Insbesondere ist der Rest-NCO-Gehalt kleiner als 0,1 oder die Mischungen sind isocyanatfrei. Unter dem Rest-NCO-Gehalt wird dabei - gemäß allgemeinem Fachmannverständnis - der Gewichtsanteil an in der schäumbaren Mischung vorhandenen freien NCO-Gruppen, bezogen auf das Gesamtgewicht der Mischung, verstanden. Im Rahmen der vorliegenden Erfindung wird der Rest-NCO-Gehalt durch die Stöchiometrie der eingesetzten Ausgangsstoffe vorgegeben, es handelt sich also um einen kalkulatorischen Wert. Bei der Berechnung des Rest-NCO-Gehaltes wird davon ausgegangen, dass sich die in den Ausgangsstoffen enthaltenen NCO-Gruppen und gegenüber NCO-Gruppen reaktiven Gruppen vollständig miteinander umsetzen. Dies konnte durch stichprobenartige Untersuchungen - titrametrisch nach Standardmethode - bestätigt werden.

Niedrige Isocyanat-Anteile oder isocyanatfreie Mischungen sind aus toxikologischer Sicht bevorzugt. Andererseits wirkt sich ein geringer Rest-NCO-Gehalt bei der Aushärtung positiv aus, indem die durch die Hydrolyse der Alkoxysilylgruppen freigesetzten Alkohole von den NCO-Gruppen abgefangen werden. Durch diese Umsetzung reagieren zum einen die verbliebenen freien, hochreaktiven Isocyanatgruppen zu toxikologisch unbedenklichen Urethangruppen ab, zum anderen können durch die freigesetzten Alkohole keine unerwünschten Nebenreaktionen, z. B. Umesterungen, ausgelöst werden.

Das/die isocyanatofunktionalisierte(n) Alkoxysilan(e) der Komponente a) weist/weisen vorzugsweise bei 23° C eine dynamische Viskosität von 50 bis 500 000 mPas, vorzugsweise 100 bis 250 000 mPas, gemessen nach DIN / EN / ISO 2555, auf. Daneben ist es erfindungsgemäß möglich, auch solche isocyanatofunktionalisierten Alkoxysilane in der Komponente a) einzusetzen, die eine höhere Viskosität als 500 000 mPas aufweisen. Um höherviskose Alkoxysilane noch abfüllen zu können, werden sie ggf. mit mindestens einem der unten aufgeführten Flammschutzmittel versetzt. Das daraus resultierende Gemisch aus isocyanatofunktionalisiertem Alkoxysilan und Flammschutzmittel weist wiederum vorzugsweise bei 23° C eine dynamische Viskosität von 50 bis 500 000 mPas, vorzugsweise 100 bis 250 000 mPas, gemessen nach DIN / EN / ISO 2555, auf.

Erfindungsgemäß ist mindestens ein in der schäumbaren Mischung enthaltenes alkoxysilanterminiertes Prepolymer herstellbar aus mindestens einem isocyanatofunktionalisierten Alkoxysilan und mindestens einer Verbindung, die mindestens eine OH-Gruppe enthält. Im Rahmen einer weiteren, besonders bevorzugten Ausführungsform der vorliegenden Erfindung ist die mindestens eine Verbindung, die mindestens eine OH-Gruppe enthält, ein Di- oder Polyol. Es kann sich bei dieser Verbindung aber auch um ein hydroxy- und/oder aminofunktionelles Alkoxysilan der Formel (1) handeln, wie es bei der Herstellung des isocyanatofunktionalisierten Alkoxysilans der Komponente a) eingesetzt wird.

Als Di- oder Polyolverbindungen kann prinzipiell eine Vielzahl von mindestens zwei Hydroxylgruppen tragenden Polymeren eingesetzt werden, beispielhaft genannt seien Polyesterpolyole, Hydroxylgruppen-haltige Polycaprolactone, Hydroxylgruppen-haltige Polybutadiene oder Polyisoprene sowie deren Hydrierungsprodukte oder auch Hydroxylgruppen-haltige Polyacrylate oder Polymethacrylate. Der Molekulargewichtsbereich der Polyole soll dabei aus Viskositätsgründen (des Prepolymers) nicht höher als 4000 sein.

Ganz besonders bevorzugt werden jedoch als Polyole Polyalkylenglycole, insbesondere Polyethylenglycole (PEG) und/oder Polypropylenglycole (PPG) mit einem Molekulargewicht (Mₙ) zwischen 400 und 2000. In einer weiteren bevorzugten Ausführungsform der erfindungsgemäßen schäumbaren Mischung wird als mindestens eine Verbindung, die mindestens eine OH-Gruppe enthält, also als Komponente b), mindestens ein Di- und/oder Triol mit einem mittleren Molekulargewicht Mₙ von 400 bis 2000 eingesetzt. Unter dem Molekulargewicht Mₙ wird das zahlenmittlere Molekulargewicht des Polymeren verstanden. Dieses kann, ebenso wie das gewichtsmittlere Molekulargewicht M_{w}, durch Gelpermeationschromatographie (GPC, auch: SEC) bestimmt werden. Dieses Verfahren ist dem Fachmann bekannt.

Eine erfindungsgemäße schäumbare Zusammensetzung enthält neben mindestens einem alkoxysilanterminierten Prepolymer mindestens ein Treibmittel. Als Treibmittel können prinzipiell eine Vielzahl leichtflüchtiger Kohlenwasserstoffe eingesetzt werden. Bevorzugt wird das Treibmittel ausgewählt aus Kohlenwasserstoffen und Fluorkohlenwasserstoffen mit jeweils 1-5 Kohlenstoffatomen und Dimethylether (DME) sowie deren Mischungen. Besonders bevorzugt sind Propan, *n*Butan, Isobutan, *n*Pentan, Isopentan und DME sowie deren Mischungen, insbesondere Propan, Isobutan, *n*Butan und DME sowie deren Mischungen, wie z.B. eine DME / Propan / Isobutan / *n*Butan - Mischung aus 40 Gew.-% DME mit 60 Gew.-% einer Propan / Isobutan / nButan-Mischung im Verhältnis (Gew.-%) 30 / 65 / 5. Die Treibmittel werden in Mengen von 5 bis 40 Gew.-%, vorzugsweise 10 bis 40 Gew.%, bezogen auf das Gesamtgewicht der schäumbaren Mischung, verwendet. Besonders bevorzugt beträgt der Gehalt an Treibmittel 10 bis 30 Gew.-%, insbesondere 20 bis 25 Gew.%, bezogen auf das Gesamtgewicht der schäumbaren Mischung.

In einer speziellen Ausführungsform enthält eine erfindungsgemäße schäumbare Mischung mindestens ein flüssiges Flammschutzmittel.

Das Flammschutzmittel wird vorzugsweise ausgewählt aus der Gruppe halogenierte (insbesondere bromierte) Ether vom Typ "Ixol" der Fa. Solvay; bromierte Alkohole, insbesondere Dibromneopentylalkohol, Tribromneopentylalkohol und PHT-4-Diol (1,2-Benzendicarboxylsäure, 3,4,5,6-Tetrabrom-,2-(2-hydroxyethoxy)ethyl-2-hydroxypropylester); organische Phosphate, insbesondere Diethyl-ethanphosphonat (DEEP), Triethylphosphat (TEP), Dimethylpropylphosphonat (DMPP), Diphenylkresylphosphat (DPK), sowie chlorierte Phosphate (z. B. TMCP, Fa. Albemarle), insbesondere Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat und deren Mischungen.

Vorzugsweise sind in der erfindungsgemäßen schäumbaren Mischung Flammschutzmittel in einer Menge von 1 bis 65 Gew.-%, besonders bevorzugt von 1 bis 30 Gew.-%, bezogen auf das Gesamtgewicht der Mischung, enthalten. Besonders bevorzugt sind Gehalte von 5 bis 25 Gew.-%, insbesondere von 15 bis 20 Gew.-%, bezogen auf das Gesamtgewicht der Mischung. Es kann vorteilhaft sein, zumindest anteilig aus den vorgenannten Flammschutzmitteln diejenigen auszuwählen, die Hydroxylgruppen aufweisen, da diese in das polymere Schaumgerüst mit eingebaut werden.

Nach einer weiteren bevorzugten Ausführungsform der erfindungsgemäßen schäumbaren Mischung enthält diese mindestens einen Katalysator. Als Katalysator können alle bekannten Verbindungen eingesetzt werden, die die hydrolytische Spaltung der Bindung zwischen dem Siliziumatom und den hydrolysierbaren Gruppen der Silantermini sowie die anschließende Kondensation der Si-OH-Gruppe zu Siloxangruppierungen (Vernetzungsreaktion bzw. Haftvermittlungsfunktion) katalysieren können. Beispiele hierfür sind Titanate wie Tetrabutyltitanat und Tetrapropyltitanat, Zinn(IV)-Katalysatoren, bspw. Zinncarboxylate wie Dibutylzinndilaurat (DBTL), Dibutylzinndiacetat, Dibutylzinndiethylhexanoat, Dibutylzinndioctoat, Dibutylzinndimethylmaleat, Dibutylzinndiethylmaleat, Dibutylzinndibutylmaleat, Dibutylzinndiiosooctylmaleat, Dibutylzinnditridecylmaleat, Dibutylzinndibenzylmaleat, Dibutylzinnmaleat, Dibutylzinndiacetat, Zinnoctaoat, Dioctylzinndistealeat, Dioctylzinndilaulat, Dioctylzinndiethylmaleat, Dioctylzinndiisooctylmaleat, Dioctylzinndiacetat, und Zinnnaphthenoat; Zinnalkoxide wie Dibutylzinndimethoxid, Dibutylzinndiphenoxid, und Dibutylzinndiisoproxid; Zinnoxide wie Dibutylzinnoxid, und Dioctylzinnoxid; Reaktionsprodukte zwischen Dibutylzinnoxiden und Phthalsäureestern, Dibutylzinnbisacetylacetonat; Organoaluminumverbindungen wie Aluminumtrisacetylacetonat, Aluminumtrisethylacetoacetat, und Diisopropoxyaluminum-ethylacetoacetat; Chelatverbindungen wie Zirconumtetraacetylacetonat, und Titantetraacetylacetonat; Bleioctanoat; Aminverbindungen oder ihre Salze mit Carbonsäuren, wie Butylamin, Octylamin, Laurylamin, Dibutylamine, Monoethanolamine, Diethanolamine, Triethanolamin, Diethylenetriamin, Triethylenetetramin, Oleylamine, Cyclohexylamin, Benzylamin, Diethylaminopropylamin, Xylylenediamin, Triethylenediamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)-undecen-7 (DBU), ein niedermolekulares Polyamid-Harz erhalten aus einem Überschuß eines Polyamins und einer Polybasischen Säure, Addukte aus einem Polyamin im Überschuß mit einem Epoxid, Silanhaftvermittler mit Aminogruppen, wie 3-Aminopropyltrimethoxysilan, und N-(β-aminoethyl)aminopropylmethyldimethoxysilan. Ganz besonders bevorzugte Katalysatoren sind Titanium(di-isopropoxid)bis(acetylacetonat) (TAA), Titan(IV)oxid-acetylacetonat, Aluminiumacetyl-acetonat, 1,4-Diazabicyclo[2,2,2]octan, N,N-Dimethylpiperazin, 1,8-Diazabicyclo[5.4.0]undec-7-en, Dimorpholinodimethylether, Dimorpholinodiethylether (DMDEE) oder deren Mischungen. Besonders bevorzugt enthält eine erfindungsgemäße schäumbare Mischung einen Katalysator ausgewählt aus Zinn(IV)-Katalysatoren, Titanium(di-isopropoxid)bis(acetylacetonat) (TAA), Titan(IV)oxid-acetylacetonat, Aluminiumacetylacetonat, 1,4-Diazabicyclo[2,2,2]octan, N,N-Dimethylpiperazin, 1,8-Diazabicyclo-[5.4.0]undec-7-en, Dimorpholinodimethylether, Dimorpholinodiethylether (DMDEE) und deren Mischungen. Der Katalysator, bevorzugt Mischungen mehrerer Katalysatoren, wird bevorzugt in einer Menge von 0,01 bis etwa 5 Gew.-%, bezogen auf das Gesamtgewicht der schäumbaren Mischung bzw. Zubereitung, eingesetzt.

Weiterhin kann eine erfindungsgemäße schäumbare Mischung übliche Hilfs- und Zusatzstoffe enthalten. Hierzu zählen insbesondere Schaumstablisatoren in Mengenbereichen zwischen 0,1 und 5 Gew.%, bezogen auf das Gesamtgewicht der schäumbaren Mischung.

Eine erfindungsgemäße schäumbare Mischung kann ferner einen Reaktiwerdünner enthalten. Unter einem Reaktiwerdünner wird eine Komponente verstanden, welche die Viskosität der noch nicht ausgehärteten Zusammensetzung herabsetzt, während der Aushärtung aber durch chemische Reaktion in die Vernetzung einbezogen wird. Als Reaktiwerdünner können z.B. folgende Stoffe eingesetzt werden: mit isocyanatofunktionellen Alkoxysilanen umgesetzte Polyalkylenglykole (z.B. Synalox 100-50B, DOW), Carbamatopropyltrimethoxysilan, Alkyltrimethoxysilane oder Alkyltriethoxysilane wie Methyltrimethoxysilan oder Methyltriethoxysilan; ferner Vinyltrimethoxysilan (VTMO, Geniosil XL 10, Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy-(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen. Besonders bevorzugt ist mindestens ein Reaktiwerdünner, ausgewählt aus Methyl-, Vinyl- und Phenyltrimethoxysilan und / oder deren Teilhydrolysaten sowie Mischungen davon, enthalten. Vorzugsweise ist/sind der/die Reaktiwerdünner in Konzentrationen >1 Gew.-% bis 20 Gew.-%, besonders bevorzugt zwischen 1,5 und 5 Gew.-%, bezogen auf das Gewicht des alkoxysilanterminierten Prepolymers, enthalten.

Ein weiterer Gegenstand der vorliegenden Erfindung betrifft ein Verfahren zur Herstellung einer erfindungsgemäßen schäumbaren Mischung, dass dadurch gekennzeichnet ist, dass
i) mindestens ein alkoxysilanterminiertes Prepolymer, das herstellbar ist aus
   a) mindestens einem isocyanatofunktionalisierten Alkoxysilan, welches herstellbar ist aus mindestens einem hydroxy- und/oder aminofunktionellen Alkoxysilan und mindestens einem Di-oder Polyisocyanat, und
   b) mindestens einer Verbindung, die mindestens eine OH-Gruppe enthält,
   mit mindestens einem Treibmittel und ggf. Flammschutzmittel gemischt wird und in Einweg-Druckbehälter (Aerosol-Dosen) gefüllt wird;
   oder
ii) mindestens eine Mischung, die
   mindestens ein isocyanatofunktionalisiertes Alkoxysilan, das herstellbar ist aus mindestens einem hydroxy- und/oder aminofunktionellen Alkoxysilan und mindestens einem Di-oder Polyisocyanat,
   und mindestens eine Verbindung, die mindestens eine OH-Gruppe enthält,
   sowie mindestens ein Treibmittel und ggf. Flammschutzmittel enthält, in Einweg-Druckbehälter (Aerosol-Dosen) gefüllt wird.

In dem Verfahren, welches im Wesentlichen das Befüllen von Einweg-Druckbehältern (Aerosol-Dosen) mit einer erfindungsgemäßen schäumbaren Mischung umfasst, werden also entweder das/die alkoxysilanterminierte(n) Prepolymer(e) oder die zur Herstellung des/der Prepolymer(e) benötigten Komponenten a) und b) zusammen mit Treibmittel, ggf. Flammschutzmittel und ggf. weiteren Hilfsstoffen in die Druckbehälter gefüllt. Derartige Abfüllprozesse lassen sich wegen der hohen Viskosität der alkoxysilanterminierten Prepolymere nicht ohne weiteres durchführen. Eine bekannte Variante zur Überwindung dieser Schwierigkeiten besteht darin, dass die Prepolymere erhitzt werden, wobei ihre Viskosität so weit absinkt, dass sie in die Behälter gefüllt werden können. Dieses Verfahren birgt jedoch Risiken hinsichtlich der Wärmestabilität der Komponenten. Im Rahmen der vorliegenden Erfindung werden zwei alternative Wege beschritten. Sollen die bereits synthetisierten alkoxysilanterminierten Prepolymere abgefüllt werden, wird ihre Viskosität durch den Zusatz entsprechender Mengen an Treibmittel und ggf. Flammschutzmittel so weit erniedrigt, dass sie problemlos in die Druckbehälter gefüllt werden können. In einem weiteren bevorzugten Verfahren zur Herstellung der erfindungsgemäßen schäumbaren Mischungen erfolgt die Herstellung des Prepolymers in Einweg-Druckbehältern (Aerosol-Dosen) in Abmischung mit Treibmitteln und ggf. Flammschutzitteln. Die Komponenten reagieren offenbar im Druckbehälter zu einem alkoxysilanterminierten Prepolymer, das bei Verwendung der gleichen bzw. einander entsprechender Vorstufen weitgehend identisch mit einem durch die kontrollierte, abgestufte Reaktion außerhalb des Behälters erhältlichen Prepolymer ist. Dieses Verfahren, bei dem lediglich die Ausgangsstoffe abgefüllt werden, offenbart aufgrund der niedrigeren Viskositäten dieser Komponenten große Anwendungsvorteile. Die Bereitung der schäumbaren Mischung selbst erfolgt direkt im Verkaufsgebinde, dem Einweg-Druckbehälter (Aerosol-Dose). Für diese Vorgehensweise eignen sich insbesondere die aus Diisocyanaten und hydroxy- und/oder aminofunktionellen Alkoxysilanen erhältlichen isocyanatofunktionellen Alkoxysilane.

In einer bevorzugten Ausführungsform des erfindungsgemäßen Verfahrens wird mindestens eine Mischung, die mindestens ein isocyanatofunktionalisiertes Alkoxysilan, das herstellbar ist aus mindestens einem hydroxy- und/oder aminofunktionellen Alkoxysilan und mindestens einem Di-oder Polyisocyanat, und mindestens einer Verbindung, die mindestens eine OH-Gruppe enthält, sowie mindestens ein Treibmittel und ggf. Flammschutzmittel enthält, in Einweg-Druckbehälter (Aerosol-Dosen) gefüllt und erreicht nach dem Befüllen die Temperatur der im Einweg-Druckbehälter befindlichen Mischung ohne äußere Beeinflussung Werte von 50 bis 100°C, bevorzugt von 50 bis 70°C. Dieser ohne äußere Beeinflussung, d. h. ohne zusätzliches Erwärmen oder eine sonstige Einflussnahme bewirkte Temperatursprung kann gemessen werden. Dies ist äußerst vorteilhaft, weil sich mit diesem Verfahren neben dem vereinfachten Befüllen mit niedrigviskosen Komponenten gleichzeitig auch die Stabilität des Druckbehälters nachweisen lässt. Das Verfahren ist somit geeignet, die herkömmliche, in den einschlägigen Gefahrgutvorschriften vorgesehene Wasserbadprüfung auf Stabilität des Druckbehälters zu ersetzen und dem Anwender daher den damit verbundenen Aufwand zu ersparen.

Ein weiterer Gegenstand der vorliegenden Erfindung ist ein Einweg-Druckbehälter enthaltend eine erfindungsgemäße schäumbare Mischung oder eine schäumbare Mischung, hergestellt nach einem erfindungsgemäßen Verfahren. Der Einweg-Druckbehälter (Aerosol-Dose) enthält also mindestens ein alkoxysilanterminiertes Prepolymer, herstellbar aus
a) mindestens einem isocyanatofunktionalisierten Alkoxysilan, herstellbar aus mindestens einem hydroxy- und/oder aminofunktionellen Alkoxysilan und mindestens einem Di-oder Polyisocyanat, und
b) mindestens einer Verbindung, die mindestens eine OH-Gruppe enthält;
   und mindestens ein Treibmittel. Um eine gute Verarbeitbarkeit der Mischung - insbesondere das Befüllen
   der Behälter - zu ermöglichen, beträgt die Viskosität der Mischung erfindungsgemäß 100 bis 25.000 mPas, vorzugsweise 500 bis 10.000 mPas.

Die erfindungsgemäßen schäumbaren Mischungen härten nach dem Ausbringen aus der Aerosoldose durch Reaktion mit der umgebenden Luftfeuchtigkeit zu feinzelligen Schäumen aus, so dass die schäumbaren Mischungen zum Dichten, Dämmen und/oder Montieren, z.B. von Fugen, Dachflächen, Fenstern und Türen oder zum Ausfüllen von Hohlräumen geeignet sind.

Ein weiterer Gegenstand der vorliegenden Erfindung ist daher auch die Verwendung einer erfindungsgemäßen schäumbaren Mischung oder einer nach einem erfindungsgemäßen Verfahren hergestellten Mischung zum Dichten, Dämmen und/oder Montieren von Fugen, Dachflächen, Fenstern und Türen oder zum Ausfüllen von Hohlräumen.

Ein weiterer Gegenstand der vorliegenden Erfindung ist die Verwendung einer Mischung, enthaltend mindestens ein alkoxysilanterminiertes Prepolymer, herstellbar aus
a) mindestens einem isocyanatofunktionalisierten Alkoxysilan, herstellbar aus mindestens einem hydroxy-und/oder aminofunktionellen Alkoxysilan und mindestens einem Di-oder Polyisocyanat, und
b) mindestens einer Verbindung, die mindestens eine OH-Gruppe enthält;
und mindestens ein Treibmittel als schäumbare Mischung.

Die Definitionen bzw. Ausführungsformen der mit den vorstehend verwendeten Begriffen "alkoxysilanterminiertes Prepolymer", "isocyanatofunktionalisiertes Alkoxysilan", "hydroxy- und/oder aminofunktionelles Alkoxysilan", "Di- oder Polyisocyanat", Verbindung, die mindestens eine OH-Gruppe enthält", "Treibmittel" und "schäumbare Mischung" bezeichneten Gegenstände bzw. Verbindungen sind mit den im Rahmen des vorstehenden Textes aufgeführten Definitionen bzw. Ausführungsformen identisch.

Grundsätzlich können alle im Rahmen des vorliegenden Textes als bevorzugt ausgewiesenen Ausführungsformen, Anteilsbereiche, Bestandteile und sonstigen Merkmale der erfindungsgemäßen schäumbaren Mischung, des erfindungsgemäßen Verfahrens, des erfindungsgemäßen Einweg-Druckbehälters und der erfindungsgemäßen Verwendungen in allen möglichen und sich nicht gegenseitig ausschließenden Kombinationen verwirklicht sein.

In den nachfolgenden Ausführungsbeispielen soll die Erfindung näher erläutert werden, wobei die Auswahl der Beispiele keine Beschränkung des Umfangs der Erfindungsgegenstände darstellen soll.

### Beispiele

### Herstellung von Vorprodukten und Prepolymeren:

### Beispiel 1:

In einem Rührkolben wurden 138 g Propylencarbonat und 220 g 3-Aminopropyltrimethoxysilan (Dynasilan AMMO, Fa. Evonik) 12 Stunden bei Raumtemperatur gerührt. Eine im IR-Spektrometer untersuchte Probe zeigte die vollständige Umsetzung des Propylencarbonates und indizierte die Weiterverarbeitung.

### Beispiel 2:

In einem Rührkolben wurden 144 g Hydroxpropylmethacrylat vorgelegt und langsam 211 g 1-Anilinomethyldimethoxymethylsilan (Geniosil XL972, Fa. Wacker) zugetropft. Es wurde bei Raumtemperatur nachgerührt. Eine im IR-Spektrometer untersuchte Probe zeigte die vollständige Umsetzung des Michael Reaktionsproduktes und indizierte die Weiterverarbeitung.

### Beispiel 3:

In einem Rührkolben wurden 96 g TDI - 100 vorgelegt und innerhalb einer Stunde 155 g des Umsetzungsprodukt von Propylencarbonat mit Aminosilan aus Beispiel 1 so zugetropft, dass die Temperatur unterhalb von 40°C blieb. Das entstandene Polymer wurde abgekühlt und mit 6 g Vinyltrimethoxysilan versetzt. Die Viskosität des entstandenen isocyanatofunktionellen Alkoxysilans lag bei 25.000 mPas bei Raumtemperatur (23 °C).

### Beispiel 4:

In einem Rührkolben wurden 70 g MDI-50 und 25 g TMCP vorgelegt. Anschließend wurden innerhalb einer Stunde 80 g des Umsetzungsprodukts von Propylencarbonat mit Aminosilan aus Beispiel 1 so zugetropft, dass die Temperatur unterhalb von 40°C blieb. Das entstandene Polymer wurde abgekühlt und mit 6 g Vinyltrimethoxysilan versetzt. Die Viskosität des entstandenen isocyanatofunktionellen Alkoxysilans lag bei 95.000 mPas bei Raumtemperatur (23 °C).

### Beispiel 5:

In einem Rührkolben wurden 417 g roh MDI (Desmodur 44 V20) und 160 g TMCP vorgelegt. Anschließend wurden innerhalb zwei Stunden 375 g des Umsetzungsprodukts von Propylencarbonat mit Aminosilan aus Beispiel 1 so zugetropft, dass die Temperatur unterhalb von 50°C blieb. Das entstandene Polymer wurde abgekühlt und mit 6 g Vinyltrimethoxysilan versetzt. Die Viskosität des entstandenen isocyanatofunktionellen Alkoxysilans lag bei 325.000 mPa.s bei Raumtemperatur (23 °C).

### Beispiel 6:

130 g (20mmol) TDI - 100 und 1,3 g Benzoylchlorid wurden vorgelegt und anschließend 170 g (10 mmol) PPG 400 zugetropft. Nach Erreichen des theoretischen NCO Wertes wurde langsam das Hydroxysilan aus Beispiel 1 hinzu gegeben. Das entstandene Prepolymer besitzt eine Viskosität von 800 Pas bei 23°C.

### Beispiel 7:

24,2 g PPG 400 wurden mit 51,6 g des Additionsproduktes aus Beispiel 3 gemischt und geschüttelt, wobei eine moderate Wärmetönung entstand. Das entstandene Prepolymer besitzt eine Viskosität von 900 Pas bei 23°C.

### Beispiel 8 (Vergleich) :

199 g (10 mmol) Polypropylenglycol mit einem Molekulargewicht (Mₙ) von 400 g/mol wurden mit 151 g (20 mmol) TDI als Diisocyanat vorgelegt und unter Zinn- / Bismuth Katalyse (Borchikat 22/24) zum NCO terminierten Prepolymer bei 80°C umgewandelt. Die Umwandlung erfolgt unter NCO-Kontrolle und sobald der theoretische NCO Wert des Prepolymers erreicht wurde (titrimetrisch), wurden 60 g von Aminosilan XL 972 zugegeben, wobei die Temperatur anstieg und die Viskosität massiv anstieg. Nach Zugabe von 2% Vinyltrimethoxysilan wurde das Produkt abgefüllt und wasserdicht verschlossen. Die Viskosität lag bei 23°C außerhalb des Messbereiches und somit weit oberhalb von 2000 Pas.

### Herstellung von schäumbaren Mischungen:

In eine Aerosoldose wurde das isocyanatofunktionelle Alkoxysilan des Beispiels 3 mit Polyol, Treibmittel (Mischung aus DME und Propan/Butan), Flammschutzmittel, Katalysator, Reaktivverdünner und Schaumstabilisator gefüllt. Die Dose wurde mit einem Ventil verschlossen und der Inhalt durch Schütteln vollständig vermischt. Die eigentliche Prepolymer-Synthese erfolgte somit in der Aerosoldose.

Weitere erfindungsgemäße schäumbare Mischungen wurden aus den isocyanatofunktionellen Alkoxysilanen der Beispiele 4 und 5 in analoger Wiese hergestellt. Als Polyol wurde unter anderem auch das Stepanpol PD 190LV der Fa. Stepan mit verwendet.

Die Viskositätsmessung der schäumbaren Mischungen wurde, wie oben ausgeführt, unter Substitution des Treibmittels durch eine Mischung von 8,4% Methylal und 12,6% Pentan (M/P Mischung) durchgeführt.

Nach üblicher Ausbringung der schäumbaren Mischung härtete der Schaum mit der umgebenden Luftfeuchtigkeit aus und wurde in seinen Eigenschaften bewertet.

Die Ergebnisse sind in der nachfolgenden Tabelle zusammengefasst (Mengenangaben in Gewichtsprozent). Aus den Daten ist ersichtlich, dass die erfindungsgemäßen schäumbaren Mischungen rasch zu Schäumen mit guten Eigenschaften aushärten.

Das Prepolymer des Beispiels 8 war zu hochviskos, um bei Raumtemperatur oder mäßiger Erwärmung in handelsübliche Aerosoldosen abgefüllt werden zu können.

**Tabelle**

| **Beispiel** | **9** | **10** | **10a** | **10b** | **10c** | **10d** | **11** | **12** | **13** | **14** |
|---|---|---|---|---|---|---|---|---|---|---|
| isocyanatofkt. Alkoxysilan Beispiel 3 | 46,3 | 42,7 | 42,4 | 32,87 | 44,94 | 33,51 | | | | |
| isocyanatofkt. Alkoxysilan Beispiel 4 | | | | | | | 52,4 | 49,2 | | |
| isocyanatofkt. Alkoxysilan Beispiel 5 | | | | | | | | | 45 | 45 |
| PPG 400 / Voranol CP 450 1:1 | 15,4 | | | | | | 16,1 | | | |
| PHT4-Diol/Stepanpol PD 190LV 1:1 | | 16,4 | 24,4 | 18,9 | 25,8 | 19,2 | | 19,4 | | 4,5 |
| Additionsprodukt Beispiel 1 | | | | | | | | | 22,7 | 17,8 |
| | | | | | | | | | | |
| TMCP | 15,00 | 16,5 | 10 | 25 | 15 | 15 | 7,8 | 8,4 | 9 | 9 |
| DBU | 0,50 | 0,50 | 0,50 | 0,50 | 0,50 | 0,50 | 0,50 | 0,50 | 0,50 | 0,50 |
| TAA | 0,25 | 0,25 | 0,25 | 0,25 | 0,25 | 0,25 | 0,25 | 0,25 | 0,25 | 0,25 |
| Tegostab B 8465 | 1,25 | 1,25 | 1,25 | 1,25 | 1,25 | 1,25 | 1,25 | 1,25 | 1,25 | 1,25 |
| | | | | | | | | | | |
| DME-P/B (40:60) | 21,00 | 21,00 | 21 | 21 | 10 | 30 | 21,00 | 21,00 | 21,00 | 21,00 |
| | | | | | | | | | | |
| Viskosität als M/P Mischung in mPas | 1000 | 1500 | 7000 | 2500 | 4800 | 3000 | 3000 | 4000 | 6000 | 8000 |
| Art der Zubereitung SV: strukturviskos, N: Newtonisch | SV | SV | SV | N | SV | N | SV | SV | SV | SV |
| | | | | | | | | | | |
| *Schaumbeurteilung* | | | | | | | | | | |
| Schaumstruktur (frisch) | 1 | 1 | 1 | 1 | 1 | 1 | 1 | 1 | 1 | 1 |
| Schaumstruktur (ausgehärtet) | 1 | 2 | 1 | 2 | 1 | 2 | 1 | 2 | 1 | 2 |
| Schaumvolumen | gut | gut | befr. | schlecht | ausr. | hoch | gut | gut | gut | gut |
| Hautbildung (Minuten) | 10 | 12 | 12 | 12 | 11 | 10 | 10 | 13 | 11 | 12 |
| Schneidbar (Minuten) | 120 | 150 | 150 | 150 | 120 | 120 | 120 | 150 | 120 | 150 |
| Schrumpfen | nein | gering | nein | gering | nein | gering | nein | gering | nein | gering |

| | | | | | | | | | | |
|---|---|---|---|---|---|---|---|---|---|---|
| Bewertung der Schaumstruktur: 1 sehr feinzellig 2 feinzellig Schaumvolumen: befr. = befriedigend ausr. = ausreichend TMCP - Tris(2-chlorisopropyl)phosphate DBU - 1,8-Diazabicyclo[5.4.0]undec-7-en TAA - Titanium(diisopropoxid)bis(acetylacetonat) Tegostab B 8465 - Polyether-modifiziertes Polysiloxan | | | | | | | | | | |

## Patentansprüche

1. Schäumbare Mischung, enthaltend
mindestens ein alkoxysilanterminiertes Prepolymer, herstellbar aus
a) mindestens einem isocyanatofunktionalisierten Alkoxysilan, herstellbar aus mindestens einem hydroxy- und/oder aminofunktionellen Alkoxysilan und mindestens einem Di-oder Polyisocyanat, und
b) mindestens einer Verbindung, die mindestens eine OH-Gruppe enthält;
und mindestens ein Treibmittel,
**dadurch gekennzeichnet, dass** die schäumbare Mischung bei 23° C eine dynamische Viskosität von 100 bis 25 000 mPas (gemessen nach Substitution des Treibmittels durch eine gewichtsgleiche Methylal/Pentan - Mischung im Gewichtsverhältnis 40:60 mit einem Rotationsrheometer ARES; 30 Hz; Kegel-Platte (Kegelwinkel 0,5°)), aufweist.

2. Schäumbare Mischung nach Anspruch 1, **dadurch gekennzeichnet, dass** das isocyanatofunktionalisierte Alkoxysilan hergestellt wird aus mindestens einem Di- oder Polyisocyanat und mindestens einem amino- und/oder hydroxyfunktionellen Alkoxysilan der Formel (1) 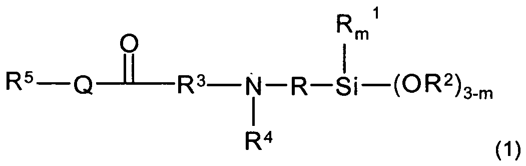 worin m 0, 1 oder 2 ist, R eine divalente organische Gruppe ist, R¹ ein Alkylrest mit 1 bis 8 Kohlenstoffatomen, R² ein Alkylrest mit 1 bis 8 Kohlenstoffatomen, R³ eine kovalente Bindung oder eine Alkylengruppe mit 1 bis 6 Kohlenstoffatomen, Q ein Sauerstoffatom oder eine kovalente Bindung, R⁴ ein Wasserstoffatom oder ein Alkyl- oder ein Arylrest mit 1 bis 10 Kohlenstoffatomen und R⁵ eine Alkyl- oder Hydroxyalkylgruppe mit 1 bis 6 Kohlenstoffatomen ist, wobei für den Fall, dass R⁵ eine Alkylgruppe ist, R⁴ ein Wasserstoffatom ist.

3. Schäumbare Mischung nach Anspruch 2, **dadurch gekennzeichnet, dass** für den Fall, dass R³ eine kovalente Bindung ist, R⁵ eine Hydroxyalkylgruppe ist.

4. Schäumbare Mischung nach Anspruch 2 oder 3, **dadurch gekennzeichnet, dass** m null oder eins ist.

5. Schäumbare Mischung nach einem der Ansprüche 1 bis 4, **dadurch gekennzeichnet, dass** der Rest-NCO-Gehalt kleiner als 1 ist.

6. Schäumbare Mischung nach einem der Ansprüche 1 bis 5, **dadurch gekennzeichnet, dass** als mindestens eine Verbindung, die mindestens eine OH-Gruppe enthält, ein Di- oder Polyol, insbesondere ein Di- oder Triol mit einem mittleren Molekulargewicht Mₙ von 400 bis 2000 eingesetzt wird.

7. Schäumbare Mischung nach einem der Ansprüche 1 bis 6, **dadurch gekennzeichnet, dass** mindestens ein Reaktiwerdünner, ausgewählt aus Methyl-, Vinyl- und Phenyltrimethoxysilan und /oder deren Teilhydrolysaten sowie Mischungen davon, enthalten ist.

8. Schäumbare Mischung nach einem der Ansprüche 1 bis 7, **dadurch gekennzeichnet, dass** der Gehalt an Treibmittel 10 - 30 Gew.-%, bezogen auf das Gesamtgewicht der Mischung, beträgt.

9. Schäumbare Mischung nach einem der Ansprüche 1 bis 8, **dadurch gekennzeichnet, dass** das Treibmittel ausgewählt wird aus Kohlenwasserstoffen und Fluorkohlenwasserstoffen mit jeweils 1-5 Kohlenstoffatomen und Dimethylether sowie deren Mischungen.

10. Schäumbare Mischung nach mindestens einem der Ansprüche 1 bis 9, **dadurch gekennzeichnet, dass** mindestens ein flüssiges Flammschutzmittel enthalten ist, das vorzugsweise ausgewählt wird aus der folgenden Gruppe: bromierte Ether; bromierte Alkohole, insbesondere Dibromneopentylalkohol, Tribromneopentylalkohol und PHT-4-Diol; organische Phosphate, insbesondere Diethyl-ethanphosphonat (DEEP), Triethylphosphat (TEP), Dimethylpropylphosphonat (DMPP), Diphenylkresylphosphat (DPK), sowie chlorierte Phosphate, insbesondere Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat und deren Mischungen.

11. Schäumbare Mischung nach einem der Ansprüche 1 bis 10, **dadurch gekennzeichnet, dass** Flammschutzmittel in einer Menge von 1 bis 30 Gew.-%, bezogen auf das Gesamtgewicht der Mischung, enthalten sind.

12. Schäumbare Mischung nach einem der Ansprüche 1 bis 11, **dadurch gekennzeichnet, dass** die schäumbare Mischung mindestens einen Katalysator ausgewählt aus Zinn(IV)-Katalysatoren, Titanium(di-isopropoxid)bis(acetylacetonat) (TAA), Titan(IV-oxid-acetylacetonat, Aluminium-acetylacetonat, 1,4-Diazabicyclo[2,2,2]octan, N,N-Dimethylpiperazin, 1,8-Diazabicyclo-[5.4.0]undec-7-en, Dimorpholinodimethylether, Dimorpholinodiethylether (DMDEE) und deren Mischungen enthält.

13. Verfahren zur Herstellung einer schäumbaren Mischung nach einem der Ansprüche 1 bis 12,
**dadurch gekennzeichnet, dass**
i) mindestens ein alkoxysilanterminiertes Prepolymer, herstellbar aus
a) mindestens einem isocyanatofunktionalisierten Alkoxysilan, herstellbar aus mindestens einem hydroxy- und/oder aminofunktionellen Alkoxysilan und mindestens einem Di-oder Polyisocyanat, und
b) mindestens einer Verbindung, die mindestens eine OH-Gruppe enthält;
mit mindestens einem Treibmittel gemischt wird und in Einweg-Druckbehälter (Aerosol-Dosen) gefüllt wird;
oder
ii) mindestens eine Mischung, enthaltend
mindestens ein isocyanatofunktionalisiertes Alkoxysilan, herstellbar aus mindestens einem hydroxy- und/oder aminofunktionellen Alkoxysilan und mindestens einem Di-oder Polyisocyanat, und
mindestens eine Verbindung, die mindestens eine OH-Gruppe enthält
sowie mindestens ein Treibmittel, in Einweg-Druckbehälter (Aerosol-Dosen) gefüllt wird.

14. Verfahren nach Anspruch 13, **dadurch gekennzeichnet, dass** mindestens eine Mischung, enthaltend mindestens ein isocyanatofunktionalisiertes Alkoxysilan, herstellbar aus mindestens einem hydroxy- und/oder aminofunktionellen Alkoxysilan und mindestens einem Di-oder Polyisocyanat, und
mindestens eine Verbindung, die mindestens eine OH-Gruppe enthält
sowie mindestens ein Treibmittel, in Einweg-Druckbehälter (Aerosol-Dosen) gefüllt wird und nach dem Befüllen die Temperatur der im Einweg-Druckbehälter befindlichen Mischung ohne äußere Beeinflussung Werte von 50 bis 100°C erreicht.

15. Einweg-Druckbehälter enthaltend eine schäumbare Mischung nach einem der Ansprüche 1 bis 12 oder eine schäumbare Mischung hergestellt nach einem Verfahren nach Anspruch 13 oder 14.

16. Verwendung einer schäumbaren Mischung nach mindestens einem der Ansprüche 1 bis 12 oder einer schäumbaren Mischung hergestellt nach einem Verfahren nach Anspruch 13 oder 14 zum Dichten, Dämmen und/oder Montieren von Fugen, Dachflächen, Fenstern oder Türen oder zum Ausfüllen von Hohlräumen.

## Claims

1. A foamable mixture, comprising
at least one alkoxysilane-terminated prepolymer, synthesizable from
a) at least one isocyanato-functionalized alkoxysilane, synthesizable from at least one hydroxy- and/or amino-functional alkoxysilane and at least one di- or polyisocyanate, and
b) at least one compound containing at least one OH group;
and at least one blowing agent,
**characterised in that** the foamable mixture has a dynamic viscosity of 100 to 25,000 mPas at 23°C (measured using an ARES rotational rheometer, after replacing the blowing agent with a methylal/pentane mixture of the same weight in a weight ratio of 40:60; 30 Hz; cone-plate (cone angle 0.5°)).

2. The foamable mixture according to claim 1, **characterised in that** the isocyanato-functionalized alkoxysilane is synthesized from at least one di- or polyisocyanate and at least one amino- and/or hydroxy-functional alkoxysilane of formula (1) 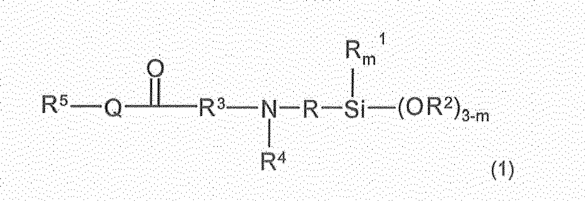 wherein m is 0, 1 or 2, R is a divalent organic group, R¹ is an alkyl residue with 1 to 8 carbon atoms, R² is an alkyl residue with 1 to 8 carbon atoms, R³ is a covalent bond or an alkylene group with one to six carbon atoms, Q is an oxygen atom or a covalent bond, R⁴ is a hydrogen atom, or an alkyl or aryl residue with 1 to 10 carbon atoms, and R⁵ is an alkyl or hydroxyalkyl group with one to six carbon atoms, wherein R⁴ is a hydrogen atom for the case when R⁵ is an alkyl group.

3. The foamable mixture according to claim 2, **characterised in that** R⁵ is a hydroxyalkyl group for the case when R³ is a covalent bond.

4. The foamable mixture according to claim 2 or 3, **characterised in that** m is zero or one.

5. The foamable mixture according to any one of claims 1 to 4, **characterised in that** the residual NCO content is less than 1.

6. The foamable mixture according to any one of claims 1 to 5, **characterised in that** a diol or polyol, in particular a diol or triol with an average molecular weight Mₙ of 400 to 2000 is used as the at least one compound containing at least one OH group.

7. The foamable mixture according to any one of claims 1 to 6, **characterised in that** it contains at least one reactive diluent, selected from methyl-, vinyl- and phenyltrimethoxysilane and/or their partial hydrolysates as well as mixtures thereof.

8. The foamable mixture according to any one of claims 1 to 7, **characterised in that** it contains blowing agent in an amount of 10 to 30 wt%, based on the total weight of the mixture.

9. The foamable mixture according to any one of claims 1 to 8, **characterised in that** the blowing agent is selected from hydrocarbons and fluorinated hydrocarbons, each having one to five carbon atoms, and dimethyl ether as well as mixtures thereof.

10. The foamable mixture according to at least one of claims 1 to 9, **characterised in that** it contains at least one liquid flame retardant, which is preferably selected from the following group: brominated ethers; brominated alcohols, in particular dibromoneopentyl alcohol, tribromoneopentyl alcohol and PHT-4-diol; organic phosphates, in
particular diethylethane phosphonate (DEEP), triethyl phosphate (TEP), dimethyl propyl phosphonate (DMPP), diphenyl cresyl phosphate (DPC), as well as chlorinated phosphates, in particular tris(2-chloroethyl) phosphate, tris(2-chloroisopropyl) phosphate (TCPP), tris(1,3-dichloroisopropyl) phosphate, tris(2,3-dibromopropyl) phosphate and tetrakis(2-chloroethyl)ethylene diphosphate and mixtures thereof.

11. The foamable mixture according to any one of claims 1 to 10, **characterised in that** it contains flame retardants in an amount of 1 to 30 wt%, based on the total weight of the mixture.

12. The foamable mixture according to any one of claims 1 to 11, **characterised in that** the foamable mixture contains at least one catalyst selected from tin(IV) catalysts, titanium (diisopropoxide) bis(acetylacetonate) (TAA), titanium (IV) oxide acetylacetonate, aluminum acetylacetonate, 1,4-diazabicyclo-[2.2.2]octane, N,N-dimethylpiperazine, 1,8-diazabicyclo[5.4.0]undec-7-ene, dimorpholinodimethyl ether, dimorpholinodiethyl ether (DMDEE) and mixtures thereof.

13. A method for producing a foamable mixture according to any one of claims 1 to 12, **characterised in that**
i) at least one alkoxysilane-terminated prepolymer, synthesizable from
a) at least one isocyanato-functionalized alkoxysilane, synthesizable from at least one hydroxy- and/or amino-functional alkoxysilane and at least one di- or polyisocyanate, and
b) at least one compound containing at least one OH group;
is mixed with at least one blowing agent and is filled into disposable pressurized containers (aerosol cans);
or
ii) at least one mixture, comprising
at least one isocyanato-functionalized alkoxysilane, synthesizable from at least one hydroxy- and/or amino-functional alkoxysilane and at least one di- or polyisocyanate,
and
at least one compound containing at least one OH group,
as well as at least one blowing agent, is filled into disposable pressurized containers (aerosol cans).

14. The method according to claim 13, **characterised in that** at least one mixture containing at least one isocyanato-functionalized alkoxysilane, synthesizable from at least one hydroxy- and/or amino-functional alkoxysilane and at least one di- or polyisocyanate, and at least one compound containing at least one OH group, as well as at least one blowing agent is filled into disposable pressurized containers (aerosol cans), and after filling, the temperature of the mixture in the disposable pressurized container reaches levels of 50 to 100°C without any external influence.

15. A disposable pressurized container containing a foamable mixture according to any one of claims 1 to 12 or a foamable mixture prepared by the method according to claim 13 or 14.

16. Use of a foamable mixture according to at least one of claims 1 to 12 or a foamable mixture prepared by a method according to claim 13 or 14 for sealing, insulating and/or installing joints, roofing, windows or doors or for filling cavities.

## Revendications

1. Mélange expansible, contenant
au moins un prépolymère à terminaison alkoxysilane, pouvant être préparé à partir
a) d'au moins un alkoxysilane pourvu d'une fonction isocyanate lequel peut être préparé à partir d'au moins un alkoxysilane pourvu d'une fonction hydroxyle et/ou amino et d'au moins un di- ou polyisocyanate, et
b) d'au moins un composé contenant au moins un groupe OH ;
et au moins un agent gonflant,
**caractérisé en ce que** ledit mélange expansible présente à 23 °C une viscosité dynamique comprise entre 100 et 25 000 mPas (mesurée suite à la substitution de l'agent gonflant par une quantité égale en poids d'un mélange méthylal/pentane ayant un rapport pondéral de 40:60, au moyen d'un rhéomètre rotatif ARES ; 30 Hz ; plaque conique (angle de conicité 0,5°)),

2. Mélange expansible selon la revendication 1, **caractérisé en ce que** l'alkoxysilane pourvu d'une fonction isocyanate est préparé à partir d'au moins un di- ou polyisocyanate et d'au moins une alkoxysilane pourvu d'une fonction amino et/ou hydroxyle répondant à la formule (1) 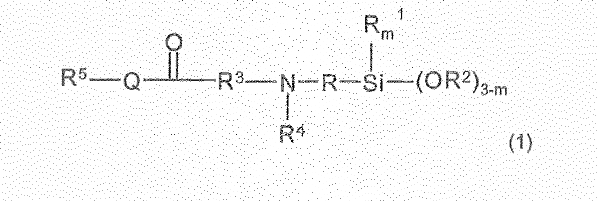 dans laquelle m est égal à 0, 1 ou 2, R est un groupe organique divalent, R¹ est un résidu alkyle renfermant 1 à 8 atomes de carbone, R² est un résidu alkyle renfermant 1 à 8 atomes de carbone, R³ est une liaison covalente ou un groupe alkylène renfermant 1 à 6 atomes de carbone, Q est un atome d'oxygène ou une liaison covalente, R⁴ est un atome d'hydrogène ou un residu alkyle ou aryle renfermant 1 à 10 atomes de carbone, et R⁵ est un groupe alkyle ou hydroxyalkyle renfermant 1 à 6 atomes de carbone, R⁴ étant un atome d'hydrogène si R⁵ est un groupe alkyle.

3. Mélange expansible selon la revendication 2, **caractérisé en ce que** R⁵ est un groupe hydroxyalkyle si R³ est une liaison covalente.

4. Mélange expansible selon les revendications 2 ou 3, **caractérisé en ce que** m est égal à zéro ou un.

5. Mélange expansible selon l'une des revendications 1 à 4, **caractérisé en ce que** la teneur résiduelle en NCO est inférieure à 1.

6. Mélange expansible selon l'une des revendications 1 à 5, **caractérisé en ce que** l'on met en oeuvre en tant qu'au moins un composé contenant au moins un groupe OH, un di- ou polyol, notamment un di- ou triol ayant une masse moléculaire moyenne Mₙ comprise entre 400 à 2 000.

7. Mélange expansible selon l'une des revendications 1 à 6, **caractérisé en ce qu'**il contient au moins un diluant de réactifs choisi parmi les méthyl-, vinyl- et phényltriméthoxysilanes et/ou leurs produits d'hydrolyse partielle ainsi que leurs mélanges.

8. Mélange expansible selon l'une des revendications 1 à 7, **caractérisé en ce que** la teneur en agent gonflant est de 10 à 30 % en poids, par rapport au poids total dudit mélange.

9. Mélange expansible selon l'une des revendications 1 à 8, **caractérisé en ce que** ledit agent gonflant est choisi parmi les hydrocarbures et les
hydrocarbures fluorées renfermant chacun 1 à 5 atomes de carbone et le diméthyléther ainsi que leurs mélanges.

10. Mélange expansible selon au moins une des revendications 1 à 9, **caractérisé en ce qu'**il contient au moins un agent ignifuge liquide lequel est préférentiellement choisi dans le groupe suivant : éthers bromés ;
alcools bromés, en particulier le dibromonéopentylalcool, le tribromonéopentylalcool et le PHT-4-diol ; phosphates organiques, en particulier le diéthyléthanphosphonate (DEEP), le triéthylphosphate (TEP), le diméthylpropylphosphonate (DMPP), le diphénylcrésylphosphate (DPK), ainsi que phosphates chlorés, en particulier le tris-(2-chloroéthyl)phosphate, le tris-(2-chloroisopropyl)phosphate (TCPP), le tris-(1,3-dichloroisopropyl)phosphate, le tris-(2,3-dibromopropyl)phosphate et le tétrakis-(2-chloroéthyl)-éthylènediphosphate, et leurs mélanges.

11. Mélange expansible selon l'une des revendications 1 à 10, **caractérisé en ce qu'**il contient des agents ignifuges dans une quantité comprise entre 1 et 30 % en poids, par rapport au poids total dudit mélange.

12. Mélange expansible selon l'une des revendications 1 à 11, **caractérisé en ce que** ledit mélange expansible contient au moins un catalyseur choisi parmi les catalyseurs d'étain(IV), le bis(acétylacétonate) de (di-isopropoxyde) de titane (TAA), l'acétylacétonate d'oxyde de titane(IV), l'acétylacétonate d'aluminium, le 1,4-diazabicyclo[2,2,2]octane, la N,N-diméthylpiperazine, le 1,8-diazabicyclo-[5.4.0]undéc-7-ène, le dimorpholinodiméthyléther, le dimorpholinodiéthyléther (DMDEE) et leurs mélanges.

13. Procédé permettant de préparer un mélange expansible selon l'une des revendications 1 à 12, **caractérisé en ce que** l'on mélange
i) au moins un prépolymère à terminaison alkoxysilane, pouvant être préparé à partir
a) d'au moins un alkoxysilane pourvu d'une fonction isocyanate lequel peut être préparé à partir d'au moins un alkoxysilane pourvu d'une fonction hydroxyle et/ou amino et d'au moins un di- ou polyisocyanate, et
b) d'au moins un composé contenant au moins un groupe OH ; avec au moins un agent gonflant pour ensuite l'introduire dans des récipients sous pression à usage unique (bombes d'aérosol) ;
ou
ii) que l'on introduit dans des récipients sous pression à usage unique (bombes d'aérosol) au moins un mélange contenant au moins un alkoxysilane pourvu d'une fonction isocyanate lequel peut être préparé à partir d'au moins un alkoxysilane pourvu d'une fonction hydroxyle et/ou amino et d'au moins un di- ou polyisocyanate, et
au moins un composé contenant au moins un groupe OH ;
ainsi qu'au moins un agent gonflant.

14. Procédé selon la revendication 13, **caractérisé en ce que** l'on introduit dans des récipients sous pression à usage unique (bombes d'aérosol) au moins un mélange contenant au moins un alkoxysilane pourvu d'une fonction isocyanate lequel peut être préparé à partir d'au moins un alkoxysilane pourvu d'une fonction hydroxyle et/ou amino et d'au moins un di- ou polyisocyanate, et
au moins un composé contenant au moins un groupe OH ;
ainsi qu'au moins un agent gonflant et que, suite au remplissage, la température du mélange contenu dans ledit récipient sous pression à usage unique atteint des valeurs comprises entre 50 et 100 °C sans subir d'influences extérieures.

15. Récipient sous pression à usage unique, contenant un mélange expansible selon l'une des revendications 1 à 12 ou un mélange expansible préparé selon un procédé selon les revendications 13 ou 14.

16. Utilisation d'un mélange expansible selon au moins une des revendications 1 à 12 ou d'un mélange expansible préparé selon un procédé selon les revendications 13 ou 14, pour rendre étanche, isoler thermiquement et/ou monter des joints, des surfaces de toiture, des fenêtres ou des portes ou pour remplir des cavités.
